# EUROPÄISCHE PATENTSCHRIFT

(11) **EP 3 765 934 B1**
(45) Veröffentlichungstag und Bekanntmachung des Hinweises auf die Patenterteilung: **22.03.2023**
(21) Anmeldenummer: 19704229.4
(22) Anmeldetag: 29.01.2019
(51) Int. Cl.: G05B 19/418

(54) **BEHÄLTERBEHANDLUNGSANLAGE UND VERFAHREN MIT SICHERHEITSGERICHTETEM MANAGEMENT VON EINSTELLUNGEN FÜR EINE BEHÄLTERBEHANDLUNGSANLAGE**
CONTAINER-PROCESSING SYSTEM AND METHOD HAVING SAFETY-ORIENTED MANAGEMENT OF SETTINGS FOR A CONTAINER-PROCESSING SYSTEM
INSTALLATION ET PROCÉDÉ DE TRAITEMENT DE RÉCIPIENTS AVEC GESTION DES PARAMÈTRES RELATIVE À LA SÉCURITÉ POUR UNE INSTALLATION DE TRAITEMENT DE RÉCIPIENTS

(30) Priorität: 16.03.2018 DE 102018106245
(43) Veröffentlichungstag der Anmeldung: 20.01.2021
(73) Patentinhaber: KRONES AG, 93073 Neutraubling (DE)
(72) Erfinder: BIELMEIER, Theodor, 93073 Neutraubling (DE); PRONOLD, Timo, 93073 Neutraubling (DE); PALUMBO, Pino-Guiseppe, 93073 Neutraubling (DE); STAUBER, Thomas, 93073 Neutraubling (DE); SCHMIDT, Stefan, 93073 Neutraubling (DE)
(74) Vertreter: Schuhbießer, Irmgard Gertrud
(86) Internationale Anmeldenummer: PCT/EP2019/052098
(87) Internationale Veröffentlichungsnummer: WO 2019/174806

(56) Entgegenhaltungen:
- DE-U1-202016 104 631
- US-A- 5 317 729
- US-A- 5 539 906
- US-A1- 2014 100 668

## Beschreibung

Die vorliegende Erfindung bezieht sich auf eine Behälterbehandlungsanlage und ein Verfahren mit sicherheitsgerichtetem Management von Einstellungen für eine Behälterbehandlungsanlage.

Eine Behälterbehandlungsanlage wird beispielsweise in der Getränkeindustrie zur Herstellung und/oder Befüllung und/oder Verpackung von Behältern verwendet. Die Behälterbehandlungsanlage kann mindestens eine Behälterbehandlungsmaschine umfassen, wie beispielsweise eine Blasmaschine und/oder eine Reinigungsmaschine und/oder eine Füllmaschine und/oder eine Etikettiermaschine und/oder eine Verpackungsmaschine. Behälter sind insbesondere Dosen, Glasflaschen oder Kunststoffflaschen. Die Behälter werden mit einer Transporteinrichtung zwischen den einzelnen Maschinen der Behälterbehandlungsanlage transportiert. Zur Qualitätssicherung sind in der Regel auch Inspektionseinrichtungen vorgesehen, welche die behandelten Behälter inspizieren und gegebenenfalls als fehlerhaft ausleiten.

Es ist möglich, dass die Behälterbehandlungsanlage zur Behandlung von verschiedenen Behältern, wie beispielsweise Behältern mit einem Fassungsvermögen von 0,33 oder 0,5 oder 1 Liter, usw., oder zum Einfüllen von verschiedenen Getränken in ein und dieselbe Behältersorte oder zum Verpacken der Behälter in ein Gebinde aus zwei, vier oder sechs, usw. Behältern und/oder mit verschiedenen Verpackungsmaterialien wie Folien, Karton etc. ausgelegt ist. Je nach Behälter, Getränk oder Gebinde ist an dem Behälter ein anderes Etikett bzw. eine andere Ausstattung anzubringen. Somit treten im Betrieb der Behälterbehandlungsanlage verschiedene Anlagenzustände auf, auf welche die Behälterbehandlungsanlage jeweils einzustellen ist.

Für die Einstellung werden Einstellwerte definiert, welche die einzelne Behälterbehandlungsmaschine oder die gesamte Behälterbehandlungsanlage für die jeweils vorgesehene Produktion der Behälter benötigt. Die Einstellwerte werden in einem Einstellwerte-Datensatz gespeichert, der auch als Rezeptur bezeichnet wird. Je nach zu produzierender Behältersorte können unterschiedliche Einstellwerte-Datensätze geladen Tel.: +49 (0)941 630 45 750 Fax: +49 (0)941 630 45 751 mail@schuhbiesser.de www.schuhbiesser.de werden, um die einzelne Behälterbehandlungsmaschine oder die gesamte Behälterbehandlungsanlage auf die verschiedenen Betriebsfälle einzustellen.

US 5,317,729 A bezieht sich auf automatisierte Maschinenmanagementsysteme und offenbart ein Verfahren für die Speicherung und Wiedergewinnung von sowohl zeitabhängigen Versionen und ansichtsabhängigen Versionen von Informationen, die technische Änderungen für die Produktion von Produkten enthalten. Dabei können Daten über jeweils vorgenommene technische Änderungen gruppiert und in einer Vielzahl von Versionen gespeichert und wiederaufgefunden werden.

US 2014/0100668 A1 zeigt ein Verfahren und eine Vorrichtung zum Managen einer flexiblen Konfiguration eines Prozesssteuersystems oder einer Anlage, wobei verschiedene Versionen von Daten in Form von "Elternobjekt", "Kindobjekt", "Klassenobjekt", usw.

Jedoch wird in keinem der genannten Dokumente des Standes der Technik für einen neu erstellten Datensatz ein Status zugeteilt, in dem ein Hinweis in Bezug auf mögliche Schäden an einer Maschine durch den Datensatz angezeigt wird.

Problematisch ist jedoch, dass der Einstellwerte-Datensatz viele verschiedene Parameter aufweist, welche sich gegebenenfalls gegenseitig beeinflussen. Daher ist der Einstellwerte-Datensatz bei der Inbetriebnahme durch mehrere Probeläufe zu optimieren. Als Folge davon nimmt die Inbetriebnahme einer solchen Behälterbehandlungsmaschine oder - anlage viel Zeit in Anspruch. Gegebenenfalls überschneidet sich sogar die Inbetriebnahme der Maschine oder Anlage mit der Produktion, wenn beispielsweise neue Produkte in das Sortiment der Maschine oder Anlage aufgenommen werden sollen. Dadurch arbeiten wechselweise sowohl Servicepersonal des Herstellers als auch Bediener der Maschine oder Anlage mit dem Einstellwerte-Datensatz. Dabei ist es oft schwierig und daher zeitaufwändig festzustellen, inwieweit der Einstellwerte-Datensatz noch die beabsichtigten Optimierungen aufweist oder bereits von einem anderen Nutzer weiterverändert oder sogar überschrieben wurde.

Ein weiteres Problem liegt darin, dass nach erfolgter Inbetriebnahme der Maschine oder Anlage die Qualität der Behälterbehandlung auch von den jeweils vorliegenden Betriebsbedingungen abhängig ist. Derartige Bedingungen sind beispielsweise Qualitätsschwankungen von Verbrauchsmaterialien für die Produktion oder wechselnde Umweltbedingungen, wie Temperaturschwankungen, usw. Auch wenn derartige Schwankungen teilweise durch Regelungstechnik kompensierbar sind, so sind doch oftmals dauerhafte Anpassungen von mindestens einem Parameter des Einstellwerte-Datensatzes erforderlich. Hierbei ist jedoch gefordert, dass durch die Anpassung keine anderen Qualitäts- oder Leistungsmerkmale der Maschine oder Anlage beeinträchtigt werden oder nicht mehr erreichbar sind oder die Maschine oder Anlage beschädigt wird oder gar ein Bediener der Maschine oder Anlage zu Schaden kommt. In der Praxis erfordert dies von den Betreibern der Maschine oder Anlage, teils sehr umständliche, zeitintensive Umgehungslösungen zu entwickeln und einzusetzen, um die Inbetriebnahme und den Produktionsalltag zu meistern und einen Produktionsausfall zu vermeiden.

Daher ist es Aufgabe der vorliegenden Erfindung, eine Behälterbehandlungsanlage und ein Verfahren mit sicherheitsgerichtetem Management von Einstellungen für eine Behälterbehandlungsanlage bereitzustellen, mit welchen die zuvor genannten Probleme gelöst werden können. Insbesondere sollen eine Behälterbehandlungsanlage und ein Verfahren mit sicherheitsgerichtetem Management von Einstellungen für eine Behälterbehandlungsanlage bereitgestellt werden, bei welchen die Einstellung und/oder Umstellung für die Behälterbehandlungsanlage mit hoher Sicherheit für Mensch, Anlage und Produktionsqualität so schnell wie möglich durchführbar ist.

Die Aufgabe wird durch eine Behälterbehandlungsanlage nach Anspruch 1 gelöst. Die Behälterbehandlungsanlage hat mindestens eine Behälterbehandlungsmaschine zum Behandeln von Behältern, wobei mindestens eine Behälterbehandlungsmaschine einen Sortenspeicher aufweist, in welchem verschiedene Datensätze für Sorten einer von der Behälterbehandlungsmaschine durchzuführende Behandlung gespeichert und für eine Behandlung von Behältern auswählbar sind, mindestens einer Managementeinrichtung zum Management eines Speicherns der Datensätze, wobei die mindestens eine Managementeinrichtung ausgestaltet ist, beim Erstellen eines der Datensätze eine Hauptversion des Datensatzes zu erzeugen und dabei der Hauptversion einen Status zuzuordnen, die Hauptversion beizubehalten, wenn an der Hauptversion ohne Wechsel des Status eine Änderung durchgeführt wird und für die Änderung der Hauptversion zusätzlich eine Nebenversion mit dem Status der Hauptversion anzulegen, und den Umfang des Zugriffs auf die Hauptversion und die mindestens eine Nebenversion durch einen Bediener der mindestens einen Behälterbehandlungsmaschine in Abhängigkeit von dem Status und einer vorbestimmten Berechtigung eines Bedieners einzustellen, wie in Anspruch 1 beschrieben.

Mit der Behälterbehandlungsanlage können alle Anwender der Anlage entlang des Produktlebenszyklus mit den Einstellwerte-Datensätzen sicher und flexibel arbeiten ohne umständliche, zeitintensive Umgehungslösungen entwickeln und einsetzen zu müssen. Dadurch kann die Inbetriebnahme der Behälterbehandlungsanlage verkürzt und dadurch kostengünstiger gestaltet werden. Außerdem sind Produktionsausfälle durch versehentliches Überschreiben von Einstellwerte-Datensätzen sicher vermeidbar.

Somit bietet die beschriebene Behälterbehandlungsanlage durch die statusabhängige Rechtevergabe und Versionierung von Einstellwerte-Datensätzen bzw. Rezepturen den großen Vorteil, dass die Bediener der Anlage im gesamten Nutzungszeitraum eines Einstellwerte-Datensatzes auf Änderungen der Betriebsbedingungen mit maximaler Flexibilität reagieren können. Hierbei ist gleichzeitig die Sicherheit vorhanden, dass mit nur einem Datensatz gearbeitet wird. Für diesen Datensatz ist immer klar ersichtlich, welchen derzeitigen Bearbeitungsstand dieser Einstellwerte-Datensatz hat.

Dadurch wird die Verfügbarkeit der Behälterbehandlungsanlage erhöht, wodurch die Betriebskosten für die Behälterbehandlungsanlage verringert werden können.

Vorteilhafte weitere Ausgestaltungen der Behälterbehandlungsanlage sind in den abhängigen Ansprüchen angegeben.

Die mindestens eine Managementeinrichtung kann zudem ausgestaltet sein, beim Wechsel des Status von einem ersten Status zu einem zweiten Status die Hauptversion des ersten Status mit einer Hauptversion des zweiten Status zu überschreiben und alle Nebenversionen des ersten Status zu löschen.

In einer speziellen Ausgestaltung hat der Status die Zustände "Neu", "Eingestellt", "Abgenommen" und "Produktion".

In einer weiteren Ausgestaltung kann die mindestens eine Managementeinrichtung für jeden Datensatz mit dem Erzeugen der ersten Hauptversion ein Logbuch anlegen und in dem Logbuch alle Aktionen von der initialen Erzeugung des Datensatzes bis zur Verwendung bei der Behandlung von Behältern eintragen.

Möglich ist, dass die mindestens eine Managementeinrichtung ausgestaltet ist, in Daten zu speichern, welche Berechtigung ein Bediener der mindestens einen Behälterbehandlungsmaschine in Bezug auf ein Lesen oder Schreiben der Versionen der Datensätze für deren jeweiligen Status hat. Zusätzlich oder alternativ ist die mindestens eine Managementeinrichtung ausgestaltet, eine Bedieneinrichtung der mindestens einen Behälterbehandlungsmaschine in Abhängigkeit von dem Status und der vorbestimmten Berechtigung eines Bedieners zur Ausführung von Aktionen der mindestens einen Behälterbehandlungsmaschine zumindest teilweise funktionsfähig zu schalten oder die Ausführung der Aktionen zumindest teilweise zu sperren.

Die mindestens eine Managementeinrichtung ist ausgestaltet, jedem neu erstellten Datensatz den Status zuzuteilen, in welchem auch einem Bediener, der alle Berechtigungen zur Bearbeitung des Datensatzes hat, beim Bearbeiten des Datensatzes ein Hinweis angezeigt wird, dass der Datensatz Schäden an der mindestens einen Behälterbehandlungsmaschine verursachen kann.

Gemäß noch einer weiteren Ausgestaltung ist die mindestens eine Managementeinrichtung ausgestaltet, in Daten eine maximale Anzahl für Nebenversionen zu speichern, und für die Speicherung einer neuen Nebenversion die älteste Nebenversion zu löschen, wenn die Anzahl von bereits gespeicherten Nebenversionen gleich der maximalen Anzahl für Nebenversionen ist.

Gemäß einem Ausführungsbeispiel ist die mindestens eine Managementeinrichtung ausgestaltet, zusätzlich zu einer maximalen Anzahl für Nebenversionen eine vorbestimmte Anzahl für Speicherpunkte für den Bediener vorzuhalten, an welchen der Bediener jeweils eine Nebenversion mit zugeordnetem Status speichern kann.

Denkbar ist ferner, dass die mindestens eine Managementeinrichtung ausgestaltet ist, nur eine neue Nebenversion zu speichern, wenn sich der der neuen Nebenversion entsprechende Datensatz von dem Datensatz der letzten Nebenversion unterscheidet.

Gemäß einem Ausführungsbeispiel ist die mindestens eine Managementeinrichtung ausgestaltet, eine Hauptversion und/oder eine Nebenversion in mindestens ein externes Speichermedium zu speichern, bevor die Managementeinrichtung die Hauptversion und/oder eine Nebenversion aufgrund eines Wechsel des Status oder aufgrund einer vorbestimmten Vorgabe aus dem Sortenspeicher löscht.

Möglicherweise weist die mindestens eine Behälterbehandlungsmaschine eine Blasmaschine und/oder eine Reinigungsmaschine und/oder eine Wärmebehandlungsmaschine und/oder eine Füllmaschine und/oder eine Ausstattungsmaschine und/oder eine Verpackungsmaschine und/oder eine Palettiermaschine auf.

Die Aufgabe wird zudem durch ein Verfahren mit sicherheitsgerichtetem Management von Einstellungen für eine Behälterbehandlungsanlage nach Anspruch 12 gelöst. Die Behälterbehandlungsanlage hat mindestens eine Behälterbehandlungsmaschine zum Behandeln von Behältern und mindestens eine Managementeinrichtung, wobei die mindestens eine Behälterbehandlungsmaschine einen Sortenspeicher aufweist, in welchem verschiedene Datensätze für Sorten einer von der Behälterbehandlungsmaschine durchzuführende Behandlung gespeichert und für eine Behandlung von Behältern auswählbar sind, wobei die mindestens eine Managementeinrichtung zum Management eines Speicherns der Datensätze die Schritte ausführt: Erzeugen, beim Erstellen eines der Datensätze, einer Hauptversion des Datensatzes und dabei Zuordnen eines Status zu der Hauptversion, Beibehalten der Hauptversion, wenn an der Hauptversion ohne Wechsel des Status eine Änderung durchgeführt wird, und zusätzlich Anlegen, für die Änderung der Hauptversion, einer Nebenversion mit dem Status der Hauptversion, und Einstellen des Umfangs des Zugriffs auf die Hauptversion und die mindestens eine Nebenversion durch einen Bediener der mindestens einen Behälterbehandlungsmaschine in Abhängigkeit von dem Status und einer vorbestimmten Berechtigung eines Bedieners, wie in Anspruch 12 beschrieben.

Das Verfahren erzielt dieselben Vorteile, die zuvor in Bezug auf die Behälterbehandlungsanlage genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen, soweit sie im Schutzumfang der zugehörigen Ansprüche liegen Dabei kann der Fachmann im Rahmen der beanspruchten Erfindung auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand eines Ausführungsbeispiels näher beschrieben. Es zeigen:
Fig. 1 ein schematisches Blockschaltbild einer Behälterbehandlungsanlage gemäß einem ersten Ausführungsbeispiel;
Fig. 2 ein schematisches Blockschaltbild zur Erläuterung der Funktion des Managements von verschiedenen Datensätzen zum Betrieb der Behälterbehandlungsanlage oder einer ihrer Behälterbehandlungsmaschinen gemäß einem ersten Ausführungsbeispiel;
Fig. 3 ein schematisches Blockschaltbild zur Erläuterung der Funktion des Managements von verschiedenen Datensätzen zum Betrieb der Behälterbehandlungsanlage oder einer ihrer Behälterbehandlungsmaschinen gemäß einem zweiten Ausführungsbeispiel; und
Fig. 4 ein schematisches Blockschaltbild zur Erläuterung der Funktion des Managements von verschiedenen Datensätzen zum Betrieb der Behälterbehandlungsanlage oder einer ihrer Behälterbehandlungsmaschinen gemäß einem dritten Ausführungsbeispiel.

In den Figuren sind gleiche oder funktionsgleiche Elemente, sofern nichts anderes angegeben ist, mit denselben Bezugszeichen versehen.

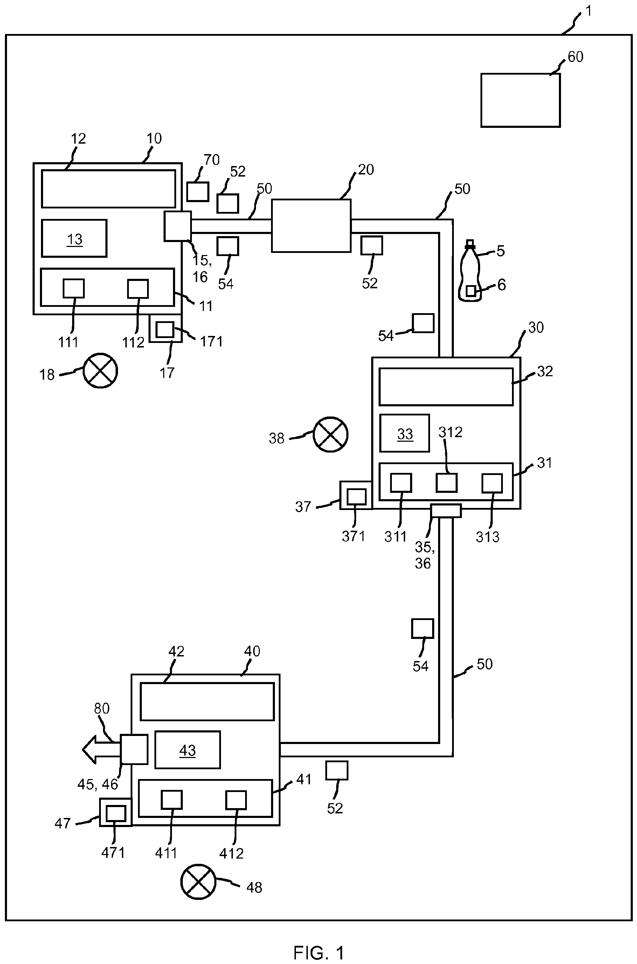

Fig. 1 zeigt sehr schematisch eine Behälterbehandlungsanlage 1 zur Behandlung von Behältern 5. Die Behälter 5 können entweder fertige Behälter, wie Glas- oder Kunststoffflaschen, Dosen, usw. oder auch Vorformlinge sein. In der Behälterbehandlungsanlage 1 in Fig. 1 können die Behälter 5 aus den Vorformlingen hergestellt sein. Die Vorformlinge sind aus Kunststoff, wie Polyäthylen-Terephthalat (PET), Polypropylen (PP) usw. gefertigt und sind ebenfalls Behälter, wenn auch noch unfertige bzw. von der Behälterbehandlungsanlage 1 unbehandelte Behälter. Die fertiggestellten Behälter 5 sind in Fig. 1 als Beispiel Flaschen, in die ein Produkt eingefüllt werden kann. Das Produkt kann insbesondere ein Getränk, ein Reinigungsmittel usw. sein. Die Behälter 5 können in der Behälterbehandlungsanlage 1 mit einem Etikett 6 versehen werden.

Bei dem speziellen Beispiel von Fig. 1 umfasst die Behälterbehandlungsanlage 1, eine erste Behälterbehandlungsmaschine 10, eine zweite Behälterbehandlungsmaschine 20, eine dritte Behälterbehandlungsmaschine 30 und eine vierte Behälterbehandlungsmaschine 40 sowie Transporteinrichtungen 50 mit jeweils einer Transporteinrichtung-Steuereinrichtung 52 und einer zugeordneten Inspektionseinrichtung 54, eine Steuereinrichtung 60 und eine Erfassungseinrichtung 70. Bei einer mit einem Pfeil 80 markierten Stelle der Behälterbehandlungsanlage 1 werden die Behälter 5 aus der Behälterbehandlungsanlage 1 ausgegeben.

Die erste Behälterbehandlungsmaschine 10 hat einen Sortenspeicher 11, eine Maschinensteuereinrichtung 12, eine Managementeinrichtung 13 und beispielsweise einen umstellbaren Auslauf 15, an dem eine erste Umstelleinrichtung 16 zur automatischen Umstellung des Auslaufs 15 auf die jeweilige geplante bzw. zu produzierende Behältersorte vorgesehen ist. Die Umstelleinrichtung 16 ist mittels einer Bedieneinrichtung 17 von einem ersten Bediener 18 steuerbar. Hierfür kann die Bedieneinrichtung 17 bei Bedarf mindestens einen Hinweis 171 ausgeben. In dem Sortenspeicher 11 sind zwei Einstellwerte-Datensätze 111, 112 für die verschiedenen Behältersorten gespeichert, die mit der Behälterbehandlungsmaschine 10 produzierbar sind. Die Managementeinrichtung 13 dient zum Management von verschiedenen Versionen der Einstellwerte-Datensätze 111, 112, die auch als Rezepturen bezeichnet werden können.

Die erste Behälterbehandlungsmaschine 10 kann beispielsweise eine Füllmaschine zum Befüllen der Behälter 5 mit dem Produkt sein, die mit einer Etikettiermaschine zum Etikettieren der Behälter 5 kombiniert ist. Es ist zusätzlich oder alternativ möglich, dass die erste Behälterbehandlungsmaschine 10 eine Streckblasmaschine mit Heizeinrichtung zum Herstellen von Kunststoffbehältern aus Preformen als Behälter 5 aufweist. Es ist zusätzlich oder alternativ eine Kombination einer Streckblasmaschine mit einer Ausstattungsmaschine, wie einer Etikettiermaschine und/oder Bedruckungsmaschine, und einer Füllmaschine oder jegliche andere Ausführung eines Blocks möglich. Bevorzugt weist jede Einzelmaschine in einem solchen Block einen Sortenspeicher auf. Der Block weist bevorzugt mindestens eine Umstelleinrichtung 15 und mindestens eine Steuereinrichtung 16 auf.

Die zweite Behälterbehandlungsmaschine 20 ist der ersten Behälterbehandlungsmaschine 10 in Transportrichtung der Behälter 5 nachgeschaltet. Die zweite Behälterbehandlungsmaschine 20 umfasst beispielsweise eine oder mehrere Produktbehandlungsmaschinen zum Pasteurisieren, Kühlen oder Aufwärmen der von der ersten Behälterbehandlungsmaschine 10 behandelten, beispielsweise befüllten, Behälter 5.

Die dritte Behälterbehandlungsmaschine 30 ist der zweiten Behälterbehandlungsmaschine 20 in Transportrichtung der Behälter 5 nachgeschaltet. Die dritte Behälterbehandlungsmaschine 30 hat einen Sortenspeicher 31, eine Maschinensteuereinrichtung 32, eine Managementeinrichtung 33 und einen umstellbaren Auslauf 35, an dem eine zweite Umstelleinrichtung 36 zur automatischen Umstellung des Auslaufs 35 auf die jeweilige geplante bzw. zu produzierende Behältersorte vorgesehen ist. Die Umstelleinrichtung 36 ist mittels einer Bedieneinrichtung 37 von einem ersten Bediener 38 steuerbar. Hierfür kann die Bedieneinrichtung 37 bei Bedarf mindestens einen Hinweis 371 ausgeben. In dem Sortenspeicher 31 sind drei Einstellwerte-Datensätze 311, 312, 313 für die verschiedenen Sorten gespeichert, die mit der Behälterbehandlungsmaschine 30 produzierbar sind. Die Managementeinrichtung 33 dient zum Management von verschiedenen Versionen der Einstellwerte-Datensätze 311, 312, 313.

Die dritte Behälterbehandlungsmaschine 30 kann beispielsweise eine Verpackungsmaschine sein zum Verpacken der Behälter 5 in insbesondere Gebinde mit einer bestimmten Anzahl von Behältern 5, beispielsweise sechs Behältern 5.

Die vierte Behälterbehandlungsmaschine 40 ist der dritten Behälterbehandlungsmaschine 30 in Transportrichtung der Behälter 5 nachgeschaltet. Die vierte Behälterbehandlungsmaschine 40 hat einen Sortenspeicher 41, eine Maschinensteuereinrichtung 42, eine Managementeinrichtung 43 und einen umstellbaren Auslauf 45, an dem eine erste Umstelleinrichtung 46 zur automatischen Umstellung des Auslaufs 45 auf die jeweilige geplante bzw. zu produzierende Behältersorte vorgesehen ist. Die Umstelleinrichtung 46 ist mittels einer Bedieneinrichtung 47 von einem ersten Bediener 48 steuerbar. Hierfür kann die Bedieneinrichtung 17 bei Bedarf mindestens einen Hinweis 471 ausgeben. In dem Sortenspeicher 41 sind zwei Einstellwerte-Datensätze 411, 412 für die verschiedenen Sorten gespeichert, die mit der Behälterbehandlungsmaschine 40 produzierbar sind. Die Managementeinrichtung 43 dient zum Management von verschiedenen Versionen der Einstellwerte-Datensätze 411, 412.

Die vierte Behälterbehandlungsmaschine 40 kann beispielsweise eine Palettiermaschine zum Verpacken der Gebinde auf Paletten sein.

In Fig. 1 haben als ein Beispiel die erste, dritte und vierte Behälterbehandlungsmaschine 10, 30, 40 einen Sortenspeicher 11, 31, 41, wie zuvor beschrieben. Selbstverständlich kann alternativ oder zusätzlich die zweite Behälterbehandlungsmaschine 20 einen Sortenspeicher aufweisen, in welchem verschiedene Einstellwerte-Datensätze für eine von der zugehörigen Behälterbehandlungsmaschine 20 durchzuführende Behandlung vorwählbar sind. Selbstverständlich ist es möglich, dass alle Behälterbehandlungsmaschinen 10, 20, 30, 40 einen Sortenspeicher aufweisen.

In dem Sortenspeicher 11 ist mindestens ein Einstellwerte-Datensatz 111, 112 gespeichert, der für die zugehörige Sorte eine beliebige Anzahl an Daten in Bezug auf die Produktion einer Flasche mit einem Fassungsvermögen von 0,5 L oder einer Flasche mit einem Fassungsvermögen von 1,0 L, oder 1,5 l usw. und/oder das in die Behälter 5 einzufüllende Produkt umfasst. Der mindestens eine Einstellwerte-Datensatz 111, 112 umfasst somit insbesondere Daten zur Temperatur, auf welche Preforms zu heizen sind, mit welcher Geschwindigkeit die Preforms durch die Heizeinrichtung zu transportieren und/oder gegebenenfalls zu drehen sind, welche Blasform zu verwenden ist, wie lange diese geschlossen sein muss, usw. Außerdem sind jeweils auch die Daten für die den jeweiligen Behältern 5 zugehörigen Etiketten, insbesondere Rundumetikett oder Brust- und Bauchetikett, oder nur Bauchetikett, oder die Beschriftung oder Bedruckung der Etiketten 6 gespeichert. In dem Sortenspeicher 31 ist mindestens ein Einstellwerte-Datensatz 311, 312, 313 gespeichert, der für die zugehörige Sorte eine beliebige Anzahl an Daten in Bezug auf die Produktion eines Gebindes mit sechs Flaschen, eines Gebindes mit zwei Flaschen, einer Spezialschutzfolie für das Gebinde, usw., umfasst. In dem Sortenspeicher 41 ist mindestens ein Einstellwerte-Datensatz 411, 412 gespeichert, der für die zugehörige Sorte eine beliebige Anzahl an Daten in Bezug auf die Verwendung und/oder Handhabung einer EURO-Palette oder eine Nicht-Euro-Palette umfasst.

Die Transporteinrichtungen 50 transportieren die Behälter 5 zwischen den einzelnen Behälterbehandlungsmaschinen 10, 20, 30, 40 von der ersten Behälterbehandlungsmaschine 10 zur zweiten Behälterbehandlungsmaschine 20 usw., so dass die Behälter 5 in Richtung des Pfeils 80 aus der Behälterbehandlungsanlage 1 ausgegeben werden. An den Transporteinrichtungen 50 ist jeweils mindestens eine Inspektionseinrichtung 54 vorgesehen, welche die behandelten Behälter 5 in Bezug auf deren Qualität inspiziert, wofür die Behälter 5 zur Inspektion nochmals behandelt und gegebenenfalls als fehlerhaft ausgeleitet werden. Gegebenenfalls werden die behandelten Behälter 5 bei oder nach der Inspektionseinrichtung 54 codiert und von der Transporteinrichtung 50 zu einer weiteren der Behälterbehandlungsmaschinen 20, 30, 40 transportiert. Die Inspektionseinrichtung 54 ist jeweils eine Einrichtung, die mit der Transporteinrichtung 50 gekoppelt ist. Es ist alternativ möglich, dass mehr als eine Inspektionseinrichtung 54 an einer Transporteinrichtung 50 vorhanden ist. Hierbei können die Inspektionseinrichtungen 54 verschiedenartige Inspektionen der Behälter 5 durchführen, wie beispielsweise eine optische Inspektion oder eine Inspektion mit Ultraschall, eine zerstörungsfreie Inspektion oder eine zerstörende Inspektion, usw.

Die Steuereinrichtung 60 steuert die erste bis vierte Behälterbehandlungsmaschine 10, 20, 30, 40 sowie die Transporteinrichtungen 50 und die Inspektionseinrichtungen 54. Zudem führt die Steuereinrichtung 60 ihre Steuerung auf der Grundlage einer Eingabe des jeweiligen Bedieners 18, 38, 48 an den Bedieneinrichtungen 17, 37, 47 aus. Hierbei steuert eine Eingabe des jeweiligen Bedieners 18, 38, 48 an den Bedieneinrichtungen 17, 37, 47 auch die Transporteinrichtung-Steuereinrichtung 52 der jeweils nachgeschalteten Transporteinrichtungen 50 und der zugehörigen Inspektionseinrichtung 54.

Zur Steuerung der Anlage 1 und/oder der ersten bis vierten Behälterbehandlungsmaschine 10, 20, 30, 40 kann sich der jeweilige Bediener 18, 38, 48 einen der Einstellwerte-Datensätze 111, 112, 311, 312, 313, 411, 412 an der jeweiligen Bedieneinrichtung 17, 37, 47 anzeigen lassen.

Nachfolgend wird als Beispiel betrachtet, dass sich der Bediener 18 zur Steuerung der ersten Behälterbehandlungsmaschine 10 den Einstellwerte-Datensatz 111 an der Bedieneinrichtung 17 anzeigen lässt.

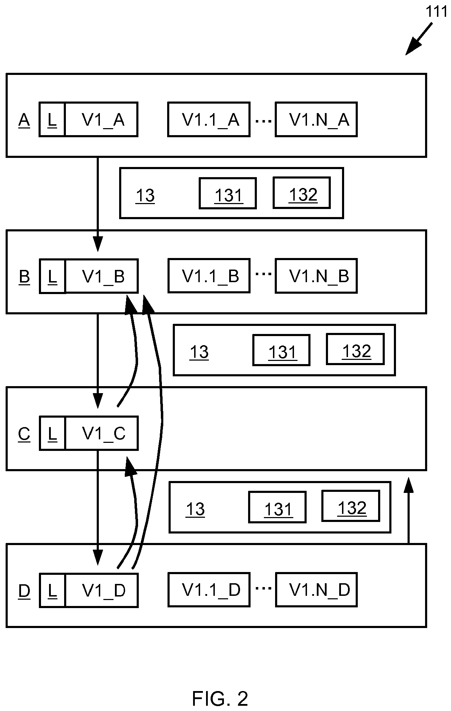

Fig. 2 zeigt die unterschiedlichen Phasen, die für den Einstellwerte-Datensatz 111 mit Hilfe eines Managements der Managementeinrichtung 13 möglich und somit in dem Sortenspeicher 11 speicherbar und/oder dokumentierbar sind. Optional kann die Managementeinrichtung 13 hierbei von der Steuereinrichtung 60 unterstützt werden oder zumindest teilweise in der Steuereinrichtung 60 angeordnet sein.

Das Management ist für die einzelnen Einstellwerte-Datensätze 111, 112, 311, 312, 313, 411, 412 dasselbe. Daher ist die nachfolgende Beschreibung für alle Einstellwerte-Datensätze 111, 112, 311, 312, 313, 411, 412 und Maschinen 10, 30, 40 gültig.

Gemäß Fig. 2 gibt es für einen Einstellwerte-Datensatz 111 immer eine Hauptversion V1. Gegebenenfalls sind zudem eine vorbestimmte Anzahl N von Nebenversionen V1.1 bis V1.N zu einer solchen Hauptversion V1 erstellt und gespeichert. Zudem hat die jeweilige Version des Einstellwerte-Datensatzes 111 immer einen vorbestimmten Status A bis D, der sich im Laufe des Lebenszyklus des Einstellwerte-Datensatzes 111 ändert, wie nachfolgend beschrieben. Der Status kann lauten:
- Status A = "Neu"
- Status B = "Eingestellt"
- Status C = "Abgenommen" und damit geprüft
- Status D = "Produktion"

Der Status A bis D informiert den Bediener 118 somit über den aktuellen Bearbeitungszustand des Einstellwerte-Datensatzes 111. Selbstverständlich ist es möglich, dass mehr oder weniger verschiedene Status vorgesehen sind. Es sind jedoch mindestens zwei verschiedene Status vorhanden, um zwischen Bearbeitungszuständen des Einstellwerte-Datensatzes 111 unterscheiden zu können. Bei dem hier gewählten speziellen Beispiel ergibt sich der Status A bis D oder ist änderbar, wie nachfolgend beschrieben.

Bei der Erstellung des Einstellwerte-Datensatzes 111 bzw. der Rezeptur zum Herstellen einer Sorte in dem Sortenspeicher 11 vergibt die Managementeinrichtung 13 dem Einstellwerte-Datensatz 111 den Status A. Zudem legt die Managementeinrichtung 13 eine Hauptversion V1_A für den Einstellwerte-Datensatz 111 an und speichert diese in dem Speicher 11. Außerdem legt die Managementeinrichtung 13 für den Einstellwerte-Datensatzes 111 bzw. die Rezeptur zum Herstellen einer Sorte ein eigenes Logbuch L an, in welches relevante Aktionen eingetragen werden. Bei der Erstellung des Einstellwerte-Datensatzes 111 vergibt die Managementeinrichtung 13 der Hauptversion V1_A und der Statusvergabe den gleichen Zeitstempel. Das Logbuch L ist unabhängig von der Wiederherstellung von Versionen und zeigt alle Aktionen von der initialen Erstellung des Einstellwerte-Datensatzes 111 bis zu einer aktuellen Nutzung des Datensatzes 111 an. Das Logbuch L kann nicht gelöscht, zurückgesetzt oder manipuliert werden.

Ein Einstellwerte-Datensatzes 111 wird erstellt, indem der Bediener 18 den Datensatz anlegt oder indem der Einstellwerte-Datensatzes 111 durch Kommunikation mit der Steuereinrichtung 60 oder einer der anderen Maschinen 20, 30, 40 an den Sortenspeicher 11 gesendet wird.

Noch dazu verwaltet die Managementeinrichtung 13 Daten 131 über Berechtigungen der einzelnen Bediener 18, 38, 48. Je nach der/den in den Daten 131 festgelegten Berechtigung(en) der einzelnen Bediener 18, 38, 48 lässt die Managementeinrichtung 13 den Zugriff auf den Datensatz 111 zu und/oder sperrt den Zugriff. Damit stellt die Managementeinrichtung 13 den Umfang des Zugriffs auf den Datensatz 111 ein.

Hat der Bediener 18 beispielsweise die Berechtigung "Operator", kann er sich die Hauptversion V1_A oder Nebenversionen V1.1_A bis V1.N_A des Einstellwerte-Datensatzes 111 mit dem Status A an der Bedieneinrichtung 17 anzeigen, um sich über den Zusammenhang zu informieren. Jedoch kann der Bediener 18 mit der Berechtigung "Operator" die Hauptversion V1_A oder deren Nebenversionen V1.1_A bis V1.N_A nicht zur Ausführung in die Steuereinrichtung(en) 12, 60 laden oder den Einstellwerte-Datensatz 111 bearbeiten. Hierfür verknüpft die Managementeinrichtung 13 die Berechtigungen des Bedieners 18 gemäß den Daten 131 beispielsweise mit Schaltflächen an der Bedieneinrichtung 17, welche für entsprechende Aktionen mit dem Einstellwerte-Datensatz 111 vorgesehen sind. Dadurch sind die Schaltflächen an der Bedieneinrichtung 17 je nach Berechtigung des Bedieners 18 gesperrt oder zur Ausführung der entsprechenden Aktionen funktionsfähig.

Hat der Bediener 18 dagegen die Berechtigung "Administrator" oder "Maschinenhersteller", kann der Bediener 18 die Hauptversion V1_A oder Nebenversionen V1.1_A bis V1.N_A des Einstellwerte-Datensatzes 111 vom Status A uneingeschränkt bearbeiten. Die Managementeinrichtung 13 stellt dem Bediener 18 hierfür jedoch Informationen zum Status A bereit. Insbesondere gibt die Managementeinrichtung 13 dem Bediener 18 beim Laden und während der Nutzung der jeweiligen Versionen des Einstellwerte-Datensatzes 111 an der Bedieneinrichtung 17 einen entsprechenden Hinweis 171, dass ein Einstellwerte-Datensatz 111 mit dem Status A, insbesondere bei unsachgemäßer Nutzung, zu Maschinenschäden führen kann.

Wird der Einstellwerte-Datensatzes 111 von einem anderen Quellen-Einstellwerte-Datensatz 111 kopiert, vergibt die Managementeinrichtung 13 den Status A für die Hauptversion V1_A oder die Nebenversionen V1.1_A bis V1.N_A des Einstellwerte-Datensatzes 111 unabhängig davon, ob der andere Quellen-Einstellwerte-Datensatz 111 bereits einen Status B oder Status C oder Status D hatte. Dadurch wird sichergestellt, dass jeder Einstellwerte-Datensatz 111 einmal von einem Bediener 18 mit der Berechtigung "Administrator" oder "Maschinenhersteller" bewertet wird.

Im Rahmen der uneingeschränkten Bearbeitung eines Einstellwerte-Datensatzes 111, kann der Bediener 18 mit der Berechtigung "Administrator" oder "Maschinenhersteller" an der Hauptversion V1_A eine Änderung vornehmen und den resultierenden Datensatz in dem Speicher 11 speichern. In diesem Fall erzeugt die Managementeinrichtung 13 eine der N Nebenversionen V1.1_A bis V1.N_A in dem Speicher 11 und behält die Hauptversion V1_A bei. Hierbei erzeugt die Managementeinrichtung 13 jedoch nur eine der N Nebenversionen V1.1_A bis V1.N_A, wenn sich der Einstellwerte-Datensatz 111 tatsächlich von der bereits gespeicherten Hauptversion V1_A oder der zuvor gespeicherten Nebenversion V1.1_A bis V1.N_A unterscheidet. Durch eine derart intelligente Erzeugung der Nebenversion V1.1_A bis V1.N_A minimiert die Managementeinrichtung 13 den Verbrauch des Speicherplatzes in dem Sortenspeicher 11.

Die Anzahl N der Nebenversionen V1.1_A bis V1.N_A ist als Daten 132 in der Managementeinrichtung 13 hinterlegt. Die Anzahl N ist vom Bediener 18 mit der Berechtigung "Administrator" oder "Maschinenhersteller" zur Laufzeit bzw. im Betrieb der Maschine 10 einstellbar. Ist die vorbestimmte Anzahl N an Nebenversionen V1.1_A bis V1.N_A erreicht, wird gemäß einem Ringpuffer bei einer Sicherung der nächsten Nebenversion die jeweils älteste Nebenversion gelöscht. Ist also beispielsweise eine Nebenversion V1.N+1_A zu speichern, würde die Nebenversion V1.1_A gelöscht.

Die Managementeinrichtung 13 bietet jedoch die Möglichkeit, dass der Bediener 18 mit der Berechtigung "Administrator" oder "Maschinenhersteller" zu einer der Nebenversionen V1.1_A bis V1.N_A zurückkehrt bzw. diese wiederherstellt. Hierfür zeigt die Managementeinrichtung 13 dem Bediener 18 die Nebenversionen V1.1_A bis V1.N_A auf der Bedieneinrichtung 17 chronologisch an. Bei der Wiederherstellung der gewünschten Nebenversion werden alle jüngeren Nebenversionen gelöscht. Soll also beispielsweise von Nebenversionen V1.1_A bis V1.5_A eine Nebenversion V1.2_A wiederhergestellt werden, bleibt die Nebenversion V1.1_A gespeichert, wohingegen die Nebenversionen V1.3_A bis V1.5_A gelöscht würden. Dadurch ist eine Rücksetzfunktion bzw. "Undo"-Funktion realisiert.

Ist eine gefahrlose Nutzung einer Version der Rezeptur bzw. des Einstellwerte-Datensatzes 111 sichergestellt, ist der Bediener 18 mit der Berechtigung "Administrator" oder "Maschinenhersteller" gemäß der Berechtigung in den Daten 131 berechtigt, den Status A einer der Versionen V1_A oder V1.1_A bis V1.N_A des Einstellwerte-Datensatzes 111 auf den Status B = "Eingestellt" zu erhöhen. Mit dem Statuswechsel überschreibt die Managementeinrichtung 13 die bestehende Hauptversion V1_A des Status A und erzeugt eine Hauptversion V1_B vom Status B. Außerdem löscht die Managementeinrichtung 13 alle Nebenversionen V1.1_A bis V1.N_A des Status A. Dadurch wird sichergestellt, dass keine Wiederherstellung von Versionen des Einstellwerte-Datensatzes 111 erfolgen kann, die nicht den Status B haben.

Durch den Statuswechsel kann nun auch ein Bediener 18 mit der Berechtigung "Operator" die Rezeptur bzw. den Einstellwerte-Datensatz 111 laden und damit produzieren.

An der Hauptversion V1_B können nun wiederum Änderungen vorgenommen werden, die von der Managementeinrichtung 13 als Nebenversionen V1.1_B bis V1.N_B vom Staus B zusätzlich zu der unveränderten Hauptversion V1_B erzeugt werden, Hierfür geht die Managementeinrichtung 13 vor, wie zuvor in Bezug auf die Hauptversion V1_A und ihre Nebenversionen V1.1_A bis V1.N_A vom Status A beschrieben.

Erfüllt die Rezeptur bzw. der Einstellwerte-Datensatz 111 auch alle die Leistungen, welche gemäß einem vorbestimmten Leistungskatalog von der Maschine 10 erwartet werden, ermöglicht die Managementeinrichtung 13 dem Bediener 18 mit der Berechtigung "Maschinenhersteller", den Status B einer der Versionen V1_B oder V1.1_B bis V1.N_B des Einstellwerte-Datensatzes 111 auf den Status C = "Abgenommen" zu erhöhen. Mit dem Statuswechsel überschreibt die Managementeinrichtung 13 die bestehende Hauptversion V1_B mit dem Status B und erzeugt eine Hauptversion V1_C mit dem Status C. Außerdem löscht die Managementeinrichtung 13 alle Nebenversionen V1.1_B bis V1.N_B vom Status B. Dadurch wird sichergestellt, dass keine Wiederherstellung von Versionen des Einstellwerte-Datensatzes 111 erfolgen kann, die nicht den Status C haben.

Durch den Statuswechsel bleibt der Bediener 18 mit der Berechtigung "Operator" berechtigt, die Rezeptur bzw. den Einstellwerte-Datensatz 111 zu laden und damit zu produzieren.

Werden permanente Änderungen an einer Rezeptur bzw. dem Einstellwerte-Datensatz 111 mit dem Status C durchgeführt, wird von der Managementeinrichtung 13 keine Nebenversion V1.1_C bis V1.N_C erzeugt, sondern die Managementeinrichtung 13 ändert den Status auf den Status D = "Produktion" und erzeugt für diese eine Hauptversion V1_D mit dem Status D und entsprechende Nebenversion(en) V1.1_D bis V1.N_D mit dem Status D. Hierbei wird die Hauptversion V1_C vom Status C jedoch beibehalten.

Dadurch kann ein Bediener 18 mit der Berechtigung "Maschinenhersteller" die Rezeptur bzw. den Einstellwerte-Datensatz 111 mit dem Status D wieder auf den Status C ändern. Auch in diesem Fall löscht die Managementeinrichtung 13 die Hauptversion V1_D und alle Nebenversionen V1.1_D bis V1.N_D mit dem Status D. Die Änderung des Status von dem Status D zu dem Status C kann besser sein, wenn beispielsweise ein ursprünglicher Abnahmestand aufgrund von Umbauten oder Verschleiß nicht mehr brauchbar ist.

Auf diese Weise ist ein flexibles Ändern der Rezepturen bzw. der Einstellwerte-Datensätze 111, 112, 311, 312, 313, 411, 412 mit großer Sicherheit für den Betrieb der Anlage 1 möglich.

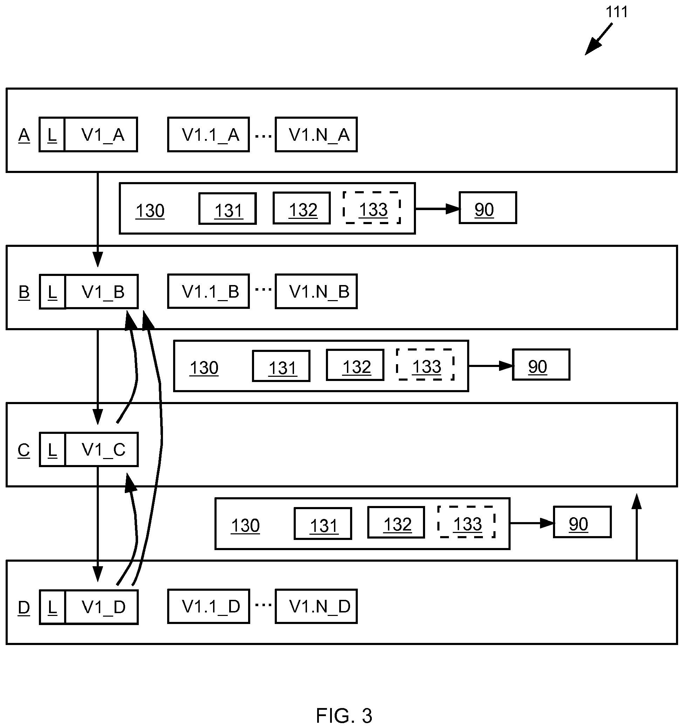

Fig. 3 veranschaulicht die Funktion einer Managementeinrichtung 130 gemäß einem zweiten Ausführungsbeispiel. Die Managementeinrichtung 130 ist zusätzlich zu den zuvor beschriebenen Funktionen der Managementeinrichtung 13 ausgestaltet, eine Speicheroptimierung durchzuführen, wie nachfolgend beschrieben.

Die Managementeinrichtung 130 überwacht den verfügbaren Speicherplatz in dem Sortenspeicher 11, um einen Produktionsstillstand zu vermeiden. Ermittelt die Managementeinrichtung 130, dass in dem Sortenspeicher 11 ein Speicherplatzmangel droht, ist die Managementeinrichtung 130 ausgestaltet, Nebenversionen V1.1 bis V1.N der verschiedenen Status A bis D selbstständig zu löschen. Hierfür ist die Managementeinrichtung 130 ausgestaltet, die Nebenversionen V1.1 bis V1.N ohne Interaktion mit dem Bediener 18 auf mindestens ein externes Speichermedium 90 zu speichern. Das mindestens eine externe Speichermedium 90 ist ein beliebiges Speichermedium, wie beispielsweise ein mehrfach beschreibbares Speichermedium, insbesondere eine Festplatte, usw., und/oder ein einfach beschreibbares Speichermedium, insbesondere eine CD, usw., und/oder ein Speichermedium in einer Cloud, usw.. Ist kein externes Speichermedium 90 vorhanden oder ist auch auf dem externen Speichermedium 90 bereits nicht mehr ausreichend Speicherplatz vorhanden, löscht die Managementeinrichtung 130 die betreffenden Nebenversionen V1.1 bis V1.N unwiederbringlich. Dies kann je nach Konfiguration der Managementeinrichtung 130 mit oder ohne Interaktion mit dem Bediener 18 erfolgen.

Optional kann der Bediener 18, insbesondere derjenige mit der Berechtigung "Administrator" oder "Maschinenhersteller" in Daten 133 einstellen, dass die Nebenversionen V1.1 bis V1.N in dem Speicher 11 nur für eine vorbestimmte Zeitdauer gespeichert werden und nach Ablauf der vorbestimmten Zeitdauer gelöscht werden. Davor können die Nebenversionen V1.1 bis V1.N gegebenenfalls auf dem mindestens einen externen Speichermedium 90 gespeichert werden.

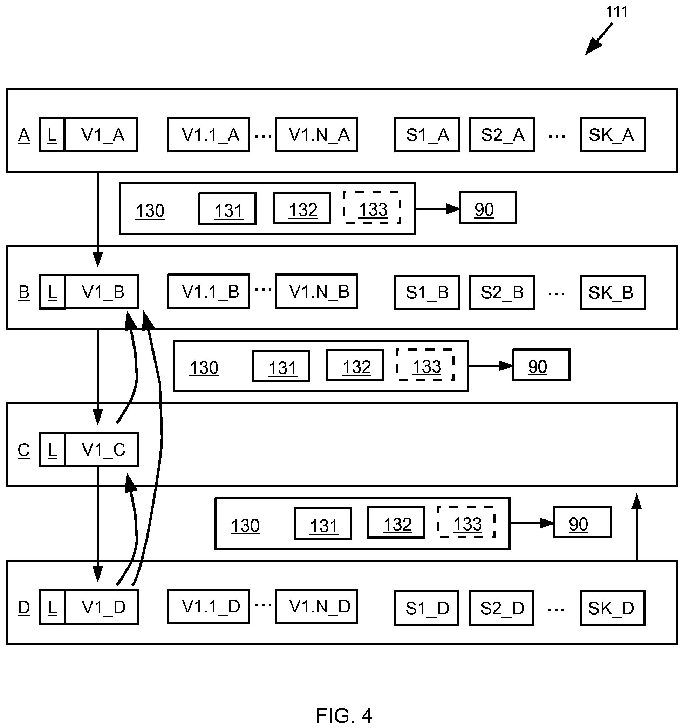

Fig. 4 veranschaulicht eine zusätzliche Funktion für die Managementeinrichtung 130 gemäß einem dritten Ausführungsbeispiel. Die Managementeinrichtung 130 bietet den Bedienern 18, 38, 48 zusätzlich zu den zuvor beschriebenen Funktionen der Managementeinrichtung 13 oder 130 die Möglichkeit, eine definierte Anzahl an Speicherpunkten S1 bis SK für die verschiedenen Statusvarianten A bis D , also SK1_A bis SK_A usw. anzulegen. Dadurch kann ein Bediener 18, 38, 48 unabhängig von seiner Berechtigung "Operator" usw. einen bestimmten Fortschritt oder Stand bei der Bearbeitung des Datensatzes 111 permanent oder zumindest zeitweise sichern.

Soll später einer der Speicherpunkte S1 bis SK bzw. SK1_A bis SK_A usw. in dem Sortenspeicher 11 wiederhergestellt werden, löscht die Managementeinrichtung 130 alle Nebenversionen V1.1 bis V1.N zu dem Datensatz 111 in dem Speicher 11. Danach beginnt das Management der Nebenversionen V1.1 bis V1.N zu dem Datensatz 111 in dem Speicher 11 von neuem. Das Gleiche gilt, wenn die Hauptversion V1 wiederhergestellt werden soll. Auch in diesem Fall löscht die Managementeinrichtung 130 alle Nebenversionen V1.1 bis V1.N zu dem Datensatz 111 in dem Speicher 11.

Gemäß einem vierten Ausführungsbeispiel bietet die Managementeinrichtung 13 oder 130 der vorangehenden Ausführungsbeispiele dem Bediener 18 mit der Berechtigung "Administrator" oder "Maschinenhersteller" eine Auswahl auf der Bedieneinrichtung 17 an, dem Datensatz 111 individuelle Leserechte (= Laden) und Schreibrechte (= Speichern) zu entziehen oder zu erteilen. Hierfür ist die Managementeinrichtung 13 oder 130 ausgestaltet, den aktuellen Freigabestatus in einer Übersicht der Datensätze 111, 112 an der Bedieneinrichtung 17 darzustellen.

Damit können unberechtigte Änderungen während der Inbetriebnahme unterbunden werden, die beispielsweise während der Nachtschichten vorgenommen werden, wenn kein Bediener 18 mit der Berechtigung "Administrator" oder "Maschinenhersteller" anwesend ist. Alle zuvor beschriebenen Ausgestaltungen der Behälterbehandlungsanlage 1, der Behälterbehandlungsmaschinen 10, 20, 30, 40, der Transporteinrichtungen 50, der Steuereinrichtung 60, der Managementeinrichtungen 13, 130 und des von diesen durchgeführten Verfahrens können einzeln oder in allen möglichen Kombinationen Verwendung finden. Die Merkmale der Ausführungsbeispiele und/oder deren Optionen sind beliebig im Rahmen der beanspruchten Erfindung miteinander kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Behälterbehandlungsanlage 1 der Ausführungsbeispiele kann eine Einweganlage oder eine Mehrweganlage sein. Bei einer Mehrweganlage werden Behälter 5 produziert, die nach Entleerung des darin eingefüllten Produkts aus dem Behälter 5 wieder gesammelt und nach Reinigung wieder zum Einfüllen eines neuen Produkts wiederverwendet werden. Im Unterschied zu einer Mehrweganlage produziert eine Einweganlage Behälter 5, die nach deren Entleerung des darin eingefüllten Produkts nicht mehr für ein Befüllen mit einem neuen Produkt wiederverwendet werden.

Zudem kann beispielsweise die erste Behälterbehandlungsmaschine 10 eine Blasmaschineneinheit, eine Füllmaschineneinheit, eine Etikettiermaschineneinheit, usw. direkt in einer Reihe hintereinander angeordnet haben, so dass die Behälter 5 jeweils von der vorhergehenden Maschineneinheit zur folgenden Maschineneinheit mittels einer nicht dargestellten Transporteinrichtung transportiert werden können.

Die Anzahl der Behälterbehandlungsmaschinen 10, 20, 30, 40 der Behälterbehandlungsanlage 1 ist beliebig wählbar.

### Bezugszeichenliste

- 1: Behälterbehandlungsanlage
- 5: Behälter
- 6: Etikett
- 10, 20, 30, 40: Behälterbehandlungsmaschine
- 11, 31, 41: Sortenspeicher
- 12, 32, 42: Maschinensteuereinrichtung
- 13: Managementeinrichtung
- 15, 35, 45: Auslauf
- 16, 36, 46: Umstelleinrichtung
- 17, 37, 47: Bedieneinrichtung
- 18, 38, 48: Bediener
- 50, 55: Transporteinrichtung
- 52: Transporteinrichtung-Steuereinrichtung
- 54: Inspektionseinrichtung
- 60: Steuereinrichtung
- 70: Erfassungseinrichtung
- 80: Pfeil für Ausgaberichtung
- 90: externes Speichermedium
- 111, 112: Sorte
- 130: Managementeinrichtung
- 131, 132, 133: Daten
- 171,371,471: Hinweis
- 311,312,313: Sorte
- 411,412: Sorte
- A, B, C, D: Status
- L: Logbuch
- S1_A bis SK_A: Speicherpunkte für Status A
- S1_B bis SK_B: Speicherpunkte für Status B
- S1_D bis SK_D: Speicherpunkte für Status D
- V1_A bis V1_D: Hauptversionen mit Status A bis D
- V1.1_A bis V1.N_A: Nebenversionen mit Status A
- V1.1_B bis V1.N_B: Nebenversionen mit Status B
- V1.1_D bis V1.N_D: Nebenversionen mit Status D

## Patentansprüche

1. Behälterbehandlungsanlage (1), mit
mindestens einer Behälterbehandlungsmaschine (10, 20, 30, 40) zum Behandeln von Behältern (5), wobei mindestens eine Behälterbehandlungsmaschine (10, 30, 40) einen Sortenspeicher (11, 31, 41) aufweist, in welchem verschiedene Einstellwerte-Datensätze (111, 112; 311, 312, 313; 411, 412) für Sorten einer von der Behälterbehandlungsmaschine (10, 30, 40) durchzuführende Behandlung gespeichert und für eine Behandlung von Behältern (5) auswählbar sind,
mindestens einer Managementeinrichtung (13; 130) zum Management eines Speicherns der Datensätze (111, 112; 311, 312, 313; 411, 412), wobei die mindestens eine Managementeinrichtung (13; 130) ausgestaltet ist,
beim Erstellen eines der Datensätze (111, 112; 311, 312, 313; 411, 412) eine Hauptversion (V1_A ... V1_D) des Datensatzes (111, 112; 311, 312, 313; 411, 412) zu erzeugen und dabei der Hauptversion (V1_A ... V1_D) einen Status (A ... D) zuzuordnen, wobei der Status (A ... D) über den aktuellen Bearbeitungszustand des Datensatzes (111, 112; 311, 312, 313; 411, 412) informiert, und wobei sich der Status (A ... D) aus einem Zustand ergibt, der bei der Erstellung des Datensatzes (111, 112; 311, 312, 313; 411, 412) bis zu der aktuellen Nutzung des Datensatzes (111, 112; 311, 312, 313; 411, 412) in der Produktion in der Behälterbehandlungsanlage (1) vorkommt,
die Hauptversion (V1_A ... V1_D) beizubehalten, wenn an der Hauptversion (V1_A ... V1_D) ohne Wechsel des Status (A ... D) eine Änderung durchgeführt wird und für die Änderung der Hauptversion (V1_A ... V1_D) zusätzlich eine Nebenversion (V1.1_A ... V1.N_A; V1.1_B ... V1.N_B; V1.1_D ... V1.N_D) mit dem Status (A ... D) der Hauptversion (V1_A ... V1_D) anzulegen,
den Umfang des Zugriffs auf die Hauptversion (V1_A ... V1_D) und die mindestens eine Nebenversion (V1.1_A ... V1.N_A; V1.1_B ... V1.N_B; V1.1_D ... V1.N_D) durch einen Bediener (18, 38, 48) der mindestens einen Behälterbehandlungsmaschine (10, 20, 30, 40) in Abhängigkeit von dem Status (A ... D) und einer vorbestimmten Berechtigung eines Bedieners (18, 38, 48) einzustellen, und
jedem neu erstellten Einstellwerte- Datensatz (111, 112; 311, 312, 313; 411, 412) einen Status (A) zuzuteilen, in welchem auch einem Bediener (18, 38, 48), der alle Berechtigungen zur Bearbeitung des Datensatzes (111, 112; 311, 312, 313; 411, 412) hat, beim Bearbeiten des Datensatzes (111, 112; 311, 312, 313; 411, 412) ein Hinweis (171, 371, 471) angezeigt wird, dass der Datensatz (111, 112; 311, 312, 313; 411, 412) Schäden an der mindestens einen Behälterbehandlungsmaschine (10, 20, 30, 40) verursachen kann.

2. Behälterbehandlungsanlage (1) nach Anspruch 1, wobei die mindestens eine Managementeinrichtung (13; 130) ausgestaltet ist, beim Wechsel des Status (A ... D) von einem ersten Status (A; B; C) zu einem zweiten Status (B; C; D) die Hauptversion (V1_A ... V1_D) des ersten Status (A) mit einer Hauptversion (V1_A ... V1_D) des zweiten Status (B; C; D) zu überschreiben und alle Nebenversionen (V1.1_A ... V1.N_A; V1.1_B ... V1.N_B; V1.1_D ... V1.N_D) des ersten Status (A; B; C) zu löschen.

3. Behälterbehandlungsanlage (1) nach Anspruch 1 oder 2, wobei der Status (A ... D) die Zustände "Neu", "Eingestellt", "Abgenommen" und "Produktion" aufweist.

4. Behälterbehandlungsanlage (1) nach einem der vorangehenden Ansprüche, wobei die mindestens eine Managementeinrichtung (13; 130) ausgestaltet ist, für jeden Einstellwerte-Datensatz (111, 112; 311, 312, 313; 411, 412) mit dem Erzeugen der ersten Hauptversion (V1_A) ein Logbuch (L) anzulegen und in dem Logbuch (L) alle Aktionen von der initialen Erzeugung des Datensatzes (111, 112; 311, 312, 313; 411, 412) bis zur aktuellen Nutzung bei der Behandlung von Behältern (5) einzutragen.

5. Behälterbehandlungsanlage (1) nach einem der vorangehenden Ansprüche,
wobei die mindestens eine Managementeinrichtung (13; 130) ausgestaltet ist, in Daten (131) zu speichern, welche Berechtigung ein Bediener (18, 38, 48) der mindestens einen Behälterbehandlungsmaschine (10, 20, 30, 40) in Bezug auf ein Lesen oder Schreiben der Versionen der Datensätze (111, 112; 311, 312, 313; 411, 412) für deren jeweiligen Status (A ... D) hat.

6. Behälterbehandlungsanlage (1) nach einem der vorangehenden Ansprüche,
wobei die mindestens eine Managementeinrichtung (13; 130) ausgestaltet ist, eine Bedieneinrichtung (17) der mindestens einen Behälterbehandlungsmaschine (10, 20, 30, 40) in Abhängigkeit von dem Status (A ... D) und der vorbestimmten Berechtigung eines Bedieners (18, 38, 48) zur Ausführung von Aktionen der mindestens einen Behälterbehandlungsmaschine (10, 20, 30, 40) zumindest teilweise funktionsfähig zu schalten oder die Ausführung der Aktionen zumindest teilweise zu sperren.

7. Behälterbehandlungsanlage (1) nach einem der vorangehenden Ansprüche,
wobei die mindestens eine Managementeinrichtung (13; 130) ausgestaltet ist, in Daten (132) eine maximale Anzahl (N) für Nebenversionen (V1.1_A ... V1.N_A) zu speichern, und
wobei die mindestens eine Managementeinrichtung (13; 130) ausgestaltet ist, für die Speicherung einer neuen Nebenversion (V1.N+1_A) die älteste Nebenversion (V1.1_A) zu löschen, wenn die Anzahl von bereits gespeicherten Nebenversionen (V1.1_A ... V1.N_A) gleich der maximalen Anzahl (N) für Nebenversionen (V1.1_A ... V1.N_A) ist.

8. Behälterbehandlungsanlage (1) nach Anspruch 7, wobei die mindestens eine Managementeinrichtung (13; 130) ausgestaltet ist, zusätzlich zu einer maximalen Anzahl (N) für Nebenversionen (V1.1_A ... V1.N_A) eine vorbestimmte Anzahl (K) für Speicherpunkte (S1_A ... S1K_A) für den Bediener (18, 38, 48) vorzuhalten, an welchen der Bediener (18, 38, 48) jeweils eine Nebenversion (V1.1_A ... V1.N_A) mit zugeordnetem Status (A ... D) speichern kann.

9. Behälterbehandlungsanlage (1) nach einem der vorangehenden Ansprüche, wobei die mindestens eine Managementeinrichtung (13; 130) ausgestaltet ist, nur eine neue Nebenversion (V1.2_A) zu speichern, wenn sich der der neuen Nebenversion (V1.2_A) entsprechende Datensatz (111, 112; 311, 312, 313; 411, 412) von dem Datensatz (111, 112; 311, 312, 313; 411, 412) der letzten Nebenversion (V1.1_A) unterscheidet.

10. Behälterbehandlungsanlage (1) nach einem der vorangehenden Ansprüche, wobei die mindestens eine Managementeinrichtung (13; 130) ausgestaltet ist, eine Hauptversion (V1_A) und/oder eine Nebenversion (V1.1_A ... V1.N_A) in mindestens ein externes Speichermedium (90) zu speichern, bevor die Managementeinrichtung (13; 130) die Hauptversion (V1_A) und/oder eine Nebenversion (V1.1_A ... V1.N_A) aufgrund eines Wechsel des Status ( A ... D) oder aufgrund einer vorbestimmten Vorgabe aus dem Sortenspeicher (11) löscht.

11. Behälterbehandlungsanlage (1) nach einem der vorangehenden Ansprüche, wobei die mindestens eine Behälterbehandlungsmaschine (10, 20, 30, 40) eine Blasmaschine und/oder eine Reinigungsmaschine und/oder eine Wärmebehandlungsmaschine und/oder eine Füllmaschine und/oder eine Ausstattungsmaschine und/oder eine Verpackungsmaschine und/oder eine Palettiermaschine aufweist.

12. Verfahren zum sicherheitsgerichteten Management von Einstellungen für eine Behälterbehandlungsanlage (1), die mindestens eine Behälterbehandlungsmaschine (10, 20, 30, 40) zum Behandeln von Behältern (5) und mindestens eine Managementeinrichtung (13; 130) aufweist, wobei die mindestens eine Behälterbehandlungsmaschine (10, 30, 40) einen Sortenspeicher (11, 31, 41) aufweist, in welchem verschiedene Einstellwerte-Datensätze (111, 112; 311, 312, 313; 411, 412) für Sorten einer von der Behälterbehandlungsmaschine (10, 30, 40) durchzuführende Behandlung gespeichert und für eine Behandlung von Behältern (5) auswählbar sind, wobei die mindestens eine Managementeinrichtung (13; 130) zum Management eines Speicherns der Datensätze (111, 112; 311, 312, 313; 411, 412) die Schritte ausführt
Erzeugen, beim Erstellen eines der Datensätze (111, 112; 311, 312, 313; 411, 412), einer Hauptversion (V1_A ... V1_D) des Datensatzes (111, 112; 311, 312, 313; 411, 412) und dabei Zuordnen eines Status (A ... D) zu der Hauptversion (V1_A ... V1_D), wobei der Status (A ... D) über den aktuellen Bearbeitungszustand des Datensatzes (111, 112; 311, 312, 313; 411, 412) informiert, und wobei sich der Status (A ... D) aus einem Zustand ergibt, der bei der Erstellung des Datensatzes (111, 112; 311, 312, 313; 411, 412) bis zu der aktuellen Nutzung des Datensatzes (111, 112; 311, 312, 313; 411, 412) in der Produktion in der Behälterbehandlungsanlage (1) vorkommt,
Beibehalten der Hauptversion (V1_A ... V1_D), wenn an der Hauptversion (V1_A ... V1_D) ohne Wechsel des Status (A ... D) eine Änderung durchgeführt wird, und zusätzlich Anlegen, für die Änderung der Hauptversion (V1_A ... V1_D), einer Nebenversion (V1.1_A ... V1.N_A; V1.1_B ... V1.N_B; V1.1_D ... V1.N_D) mit dem Status (A ... D) der Hauptversion (V1_A ... V1_D), und
Einstellen des Umfangs des Zugriffs auf die Hauptversion (V1_A ... V1_D) und die mindestens eine Nebenversion (V1.1_A ... V1.N_A; V1.1_B ... V1.N_B; V1.1_D ... V1.N_D) durch einen Bediener (18, 38, 48) der mindestens einen Behälterbehandlungsmaschine (10, 20, 30, 40) in Abhängigkeit von dem Status (A ... D) und einer vorbestimmten Berechtigung eines Bedieners (18, 38, 48), und
Zuteilen zu jedem neu erstellten Einstellwerte- Datensatz (111, 112; 311, 312, 313; 411, 412) eines Status (A), in welchem auch einem Bediener (18, 38, 48), der alle Berechtigungen zur Bearbeitung des Datensatzes (111, 112; 311, 312, 313; 411, 412) hat, beim Bearbeiten des Datensatzes (111, 112; 311, 312, 313; 411, 412) ein Hinweis (171, 371, 471) angezeigt wird, dass der Datensatz (111, 112; 311, 312, 313; 411, 412) Schäden an der mindestens einen Behälterbehandlungsmaschine (10, 20, 30, 40) verursachen kann.

## Claims

1. A container-processing system (1) comprising
at least one container-processing machine (10, 20, 30, 40) for processing containers (5), wherein at least one container-processing machine (10, 30, 40) comprises a type memory (11, 31, 41) in which different setting-value data sets (111, 112; 311, 312, 313; 411, 412) for types of processing to be performed by the container-processing machine (10, 30, 40) are stored and are selectable for processing containers (5);
at least one management device (13; 130) for managing the storing of the data set (111, 112; 311, 312, 313; 411, 412), wherein the at least one management device (13; 130) is configured,
in the event of the creation of one of the data sets (111, 112; 311, 312, 313; 411, 412), to generate a main version (V1_A ... V1_D) of the data set (111, 112; 311, 312, 313; 411, 412) and thereby to assign a status (A ... D) to the main version (V1_A ... V1_D), wherein the status (A ... D) informs about the present editing situation of the data set (111, 112; 311, 312, 313; 411, 412), and wherein the status (A ... D) results from a situation which occurs when creating the data set (111, 112; 311, 312, 313; 411, 412) until the present use of the data set (111, 112; 311, 312, 313; 411, 412) in the production in the container-processing system (1),
to retain the main version (V1_A ... V1_D), in case a change is made to the main version (V1_A ... V1_D) without a change in the status (A ... D), and to additionally establish, for the change to the main version (V1_A ... V1_D), a secondary version (V1.1_A ... V1.N_A; V1.1_B ... V1.N_B; V1.1_D ... V1.N_D) having the status (A ... D) of the main version (V1_A ... V1_D),
to set the scope of the access to the main version (V1_A ... V1_D) and to the at least one secondary version (V1.1_A ... V1.N_A; V1.1_B ... V1.N_B; V1.1_D ... V1.N_D) by an operator (18, 38, 48) of the at least one container-processing machine (10, 20, 30, 40) depending on the status (A ... D) and a predefined authorization of an operator (18, 38, 48), and
to assign to each newly created data set (111, 112; 311, 312, 313; 411, 412) a status (A) in which also to an operator (18, 38, 48), who has all authorizations to edit the data set (111, 112; 311, 312, 313; 411, 412), is displayed a note (171, 371, 471) when editing the data set (111, 112; 311, 312, 313; 411, 412), that the data set (111, 112; 311, 312, 313; 411, 412) can cause damages to the at least one container-processing machine (10, 20, 30, 40).

2. The container-processing system (1) according to claim 1, wherein the at least one management device (13; 130) is configured to overwrite the main version (V1_A ... V1_D) of the first status (A) by a main version (V1_A ... V1_D) of the second status (B; C; D) in case the status (A ... D) of a first status (A; B; C) is changed to a second status (B; C; D) and to delete all secondary versions (V1.1_A ... V1.N_ A; V1.1_B ... V1.N_B; V1.1_D ... V1.N_D) of the first status (A; B; C).

3. The container-processing system (1) according to claim 1 or 2, wherein the status (A ... D) comprises the states "new", "set", "accepted" and "production".

4. The container-processing system (1) according to any one of the preceding claims, wherein the at least one management device (13; 130) is configured to establish a logbook (L) for each setting value data set (111, 112; 311, 312, 313; 411, 412) when generating the first main version (V1_A) and to record in the logbook (L) all actions starting from the initial generation of the data set (111, 112; 311, 312, 313; 411, 412) until the use in the processing of containers (5).

5. The container-processing system (1) according to any one of the preceding claims,
wherein the at least one management device (13; 130) is configured to store in data (131) which authorization an operator (18, 38, 48) of the at least one container-processing machine (10, 20, 30, 40) has with regard to reading or writing the versions of the data sets (111, 112; 311, 312, 313; 411, 412) for their respective status (A ... D).

6. The container-processing system (1) according to any one of the preceding claims, wherein the at least one management device (13; 130) is configured to switch an operating device (17) of the at least one container-processing machine (10, 20, 30, 40) depending on the status (A ... D) and the predetermined authorization of an operator (18, 38, 48) such that the operating device (17) is at least partially functional or to at least partially block the execution of the actions.

7. The container-processing system (1) according to any one of the preceding claims,
wherein the at least one management device (13; 130) is configured to store in data (132) a maximum number (N) for secondary versions (V1.1_A ... V1.N_A), and
wherein the at least one management device (13; 130) is configured to delete the oldest secondary version (V1.1_A) in order to store a new secondary version (V1. N+1_A), in case the number of secondary versions (V1.1_A ... V1.N_A) already stored equals the maximum number (N) for secondary versions (V1.1_A ... V1.N_A).

8. The container-processing system (1) according to claim 7, wherein the at least one management device (13; 130) is configured to provide for the operator (18, 38, 48), in addition to a maximum number (N) for secondary versions (V1.1_A ... V1.N_A), a predetermined number (K) of memory positions (S1_A ... S1 K_A) to which the operator (18, 38, 48) may store a secondary version (V1.1_A ... V1.N_A) together with the assigned status (A ... D).

9. The container-processing system (1) according to any one of the preceding claims, wherein the at least one management device (13; 130) is configured to only store a new secondary version (V1.2_A), in case the data set (111, 112; 311, 312, 313; 411, 412) corresponding to the new secondary version (V.1.2_A) differs from the data set (111, 112; 311, 312, 313; 411, 412) of the last secondary version (V1.1_A).

10. The container-processing system (1) according to any one of the preceding claims, wherein the at least one management device (13; 130) is configured to store a main version (V1_A) and / or a secondary version (V1.1_A ... V1.N_A) in at least one external memory medium (90), before the management device (13; 130) deletes the main version (V1_A) and / or a secondary version (V1.1_A ... V1.N_A) from the type memory (11) due to a change in status (A ... D) or due to a predetermined demand.

11. The container-processing system (1) according to any one of the preceding claims, wherein the at least one container-processing machine (10, 20, 30, 40) comprises a blow molding machine and / or a cleaning machine and / or a heat-processing machine and / or a filling machine and / or an equipping machine and / or a packaging machine and / or a palletizing machine.

12. A method having safety-oriented management of settings for a container-processing system (1) which comprises at least one container-processing machine (10, 20, 30, 40) for processing containers (5), wherein at least one container-processing machine (10, 30, 40) comprises a type memory (11, 31, 41), in which different setting-value data sets (111, 112; 311, 312, 313; 411, 412) for a type of processing to be performed by the container-processing machine (10, 30, 40) are stored and are selectable for processing containers (5); wherein the at least one management device (13; 130) effects, for managing the storing of the data set (111, 112; 311, 312, 313; 411, 412), the following steps,
generating, in the event of the creation of one of the data sets (111, 112; 311, 312, 313; 411, 412), a main version (V1_A ... V1_D) of the data set (111, 112; 311, 312, 313; 411, 412) and thereby assigning a status (A ... D) to the main version (V1_A ... V1_D), wherein the status (A ... D) informs about the present editing situation of the data set (111, 112; 311, 312, 313; 411, 412), and wherein the status (A ... D) results from a situation which occurs when creating the data set (111, 112; 311, 312, 313; 411, 412) until the present use of the data set (111, 112; 311, 312, 313; 411, 412) in the production in the container-processing system (1),
retaining the main version (V1_A ... V1_D), in case a change is made to the main version (V1_A ... V1_D) without a change in the status (A ... D), and to additionally establish, for the change to the main version (V1_A ... V1_D), a secondary version (V1.1_A ... V1.N_A; V1.1_B ... V1.N_B; V1.1_D ... V1.N_D) having the status (A ... D) of the main version (V1_A ... V1_D), and
setting the scope of the access to the main version (V1_A ... V1_D) and to the at least one secondary version (V1.1_A ... V1.N_A; V1.1_B ... V1.N_B; V1.1_D ... V1.N_D) by an operator (18, 38, 48) of the at least one container-processing machine (10, 20, 30, 40) in dependence on the status (A ... D) and a predefined authorization of an operator (18, 38, 48), and
assigning to each newly created data set (111, 112; 311, 312, 313; 411, 412) a status (A) in which also to an operator (18, 38, 48), who has all authorizations to edit the data set (111, 112; 311, 312, 313; 411, 412), is displayed a note (171, 371, 471) when editing the data set (111, 112; 311, 312, 313; 411, 412), that the data set (111, 112; 311, 312, 313; 411, 412) can cause damages to the at least one container-processing machine (10, 20, 30, 40).

## Revendications

1. Système de traitement de récipients (1) comprenant
au moins une machine de traitement de récipients (10, 20, 30, 40) pour traiter des récipients (5), dans lequel au moins une machine de traitement de récipients (10, 30, 40) comprend une mémoire de type (11, 31, 41) dans laquelle différents jeux de données (111, 112 ; 311, 312, 313 ; 411, 412) de valeurs de réglage pour des types de traitement à réaliser par la machine de traitement de récipients (10, 30, 40) sont stockés et peuvent être sélectionnés pour traiter des récipients (5) ;
au moins un dispositif de gestion (13 ; 130) pour gérer le stockage du jeu de données (111, 112 ; 311, 312, 313 ; 411, 412), dans lequel l'au moins un dispositif de gestion (13 ; 130) est configuré,
en cas de création d'un jeu des jeux de données (111, 112 ; 311, 312, 313 ; 411, 412), pour générer une version principale (V1_A ... V1_D) du jeu de données (111, 112 ; 311, 312, 313 ; 411, 412) et ainsi attribuer un statut (A ... D) à la version principale (V1_A ... V1_D), dans lequel le statut (A ... D) informe sur la situation d'édition actuelle du jeu de données (111, 112 ; 311, 312, 313 ; 411, 412), et dans lequel le statut (A ... D) résulte d'une situation qui se produit lors de la création du jeu de données (111, 112 ; 311, 312, 313 ; 411, 412) jusqu'à l'utilisation actuelle du jeu de données (111, 112 ; 311, 312, 313 ; 411, 412) dans la production dans le système de traitement de récipients (1),
pour conserver la version principale (V1_A ... V1_D), dans le cas où un changement est apporté à la version principale (V1_A ... V1_D) sans changer le statut (A ... D), et pour établir en plus, pour le changement vers la version principale (V1_A ... V1_D), une version secondaire (V1.1_A ... V1.N_A ; V1.1_B ... V1.N_B ; V1.1_D ... V1.N_D) ayant le statut (A ... D) de la version principale (V1_A ... V1_D),
pour régler la portée de l'accès à la version principale (V1_A ... V1_D) et à l'au moins une version secondaire (V1.1_A ... V1.N_A ; V1.1_B ... V1.N_B ; V1.1_D ... V1.N_D) par un opérateur (18, 38, 48) de l'au moins une machine de traitement de récipients (10, 20, 30, 40) en fonction du statut (A ... D) et d'une autorisation prédéfinie d'un opérateur (18, 38, 48), et
pour attribuer à chaque jeu de données (111, 112 ; 311, 312, 313 ; 411, 412) nouvellement créé un statut (A) dans lequel une note (171, 371, 471) est également affichée à un opérateur (18, 38, 48) qui a toutes les autorisations pour éditer le jeu de données (111, 112 ; 311, 312, 313 ; 411, 412), lors de l'édition du jeu de données (111, 112 ; 311, 312, 313 ; 411, 412), selon laquelle le jeu de données (111, 112 ; 311, 312, 313 ; 411, 412) peut causer des dommages à l'au moins une machine de traitement de récipients (10, 20, 30, 40).

2. Système de traitement de récipients (1) selon la revendication 1, dans lequel l'au moins un dispositif de gestion (13 ; 130) est configuré pour écraser la version principale (V1_A ... V1_D) du premier statut (A) par un version principale (V1_A ... V1_D) du deuxième statut (B ; C ; D) dans le cas où le statut (A ... D) d'un premier statut (A ; B ; C) est changé en un deuxième statut (B ; C ; D) et pour supprimer toutes les versions secondaires (V1.1_A ... V1.N_A ; V1.1_B ... V1.N_B ; V1.1_D ... V1.N_D) du premier statut (A ; B ; C).

3. Système de traitement de récipients (1) selon la revendication 1 ou 2, dans lequel le statut (A ... D) comprend les états "nouveau", "réglé", "accepté" et "production".

4. Système de traitement de récipients (1) selon l'une quelconque des revendications précédentes, dans lequel l'au moins un dispositif de gestion (13 ; 130) est configuré pour établir un journal de bord (L) pour chaque jeu de données de valeurs de réglage (111, 112 ; 311, 312, 313 ; 411, 412) lors de la génération de la première version principale (V1_A) et pour enregistrer dans le journal de bord (L) toutes les actions à partir de la génération initiale du jeu de données (111, 112 ; 311, 312, 313 ; 411, 412) jusqu'à l'utilisation dans le traitement de récipients (5).

5. Système de traitement de récipients (1) selon l'une quelconque des revendications précédentes,
dans lequel l'au moins un dispositif de gestion (13 ; 130) est configuré pour stocker dans des données (131) de quelle autorisation dispose un opérateur (18, 38, 48) de l'au moins une machine de traitement de récipients (10, 20, 30, 40) en ce qui concerne la lecture ou l'écriture des versions du jeux de données (111, 112 ; 311, 312, 313 ; 411, 412) pour leur statut (A ... D) respectif.

6. Système de traitement de récipients (1) selon l'une quelconque des revendications précédentes, dans lequel l'au moins un dispositif de gestion (13 ; 130) est configuré pour commuter un dispositif d'exploitation (17) de l'au moins une machine de traitement de récipients (10, 20, 30, 40) en fonction du statut (A ... D) et de l'autorisation prédéterminée d'un opérateur (18, 38, 48) de sorte que le dispositif d'exploitation (17) soit au moins partiellement fonctionnel ou pour bloquer au moins partiellement l'exécution des actions.

7. Système de traitement de récipients (1) selon l'une quelconque des revendications précédentes,
dans lequel l'au moins un dispositif de gestion (13 ; 130) est configuré pour stocker dans des données (132) un nombre maximum (N) de versions secondaires (V1.1_A ... V1.N_A), et
dans lequel l'au moins un dispositif de gestion (13 ; 130) est configuré pour supprimer la version secondaire (V1.1_A) la plus ancienne afin de stocker une nouvelle version secondaire (V1. N+1_A), dans le cas où le nombre de versions secondaires (V1.1_A ... V1.N_A) déjà stockées est égal au nombre maximum (N) de versions secondaires (V1.1_A ... V1.N_A).

8. Système de traitement de récipients (1) selon la revendication 7, dans lequel l'au moins un dispositif de gestion (13 ; 130) est configuré pour fournir à l'opérateur (18, 38, 48), en plus d'un nombre maximum (N) de versions secondaires (V1.1_A ... V1.N_A), un nombre prédéterminé (K) de positions de mémoire (S1_A ... S1 K_A) auxquelles l'opérateur (18, 38, 48) peut stocker une version secondaire (V1.1_A ... V1.N_A) avec le statut (A ... D) attribué.

9. Système de traitement de récipients (1) selon l'une quelconque des revendications précédentes, dans lequel l'au moins un dispositif de gestion (13 ; 130) est configuré pour ne stocker qu'une nouvelle version secondaire (V1.2_A), dans le cas où le jeu de données (111, 112 ; 311, 312, 313 ; 411, 412) correspondant à la nouvelle version secondaire (V.1.2_A) diffère du jeu de données (111, 112 ; 311, 312, 313 ; 411, 412) de la dernière version secondaire (V1.1_A).

10. Système de traitement de récipients (1) selon l'une quelconque des revendications précédentes, dans lequel l'au moins un dispositif de gestion (13 ; 130) est configuré pour stocker une version principale (V1_A) et/ou une version secondaire (V1.1_A ... V1.N_A) dans au moins un support de mémoire externe (90), avant que le dispositif de gestion (13 ;130) ne supprime la version principale (V1_A) et/ou une version secondaire (V1.1_A ... V1.N_A) de la mémoire de type (11) en raison d'un changement de statut (A ... D) ou en raison d'une demande prédéterminée.

11. Système de traitement de récipients (1) selon l'une quelconque des revendications précédentes, dans lequel l'au moins une machine de traitement de récipients (10, 20, 30, 40) comprend une machine de moulage par soufflage et/ou une machine de nettoyage et/ou une machine de traitement thermique et/ou une machine de remplissage et/ou une machine d'équipement et/ou une machine d'emballage et/ou une machine de palettisation.

12. Procédé ayant une gestion orientée sécurité de réglages pour un système de traitement de récipients (1) qui comprend au moins une machine de traitement de récipients (10, 20, 30, 40) pour traiter des récipients (5), dans lequel au moins une machine de traitement de récipients (10, 30, 40) comprend une mémoire de type (11, 31, 41) dans laquelle différents jeux de données (111, 112 ; 311, 312, 313 ; 411, 412) de valeurs de réglage pour un type de traitement à réaliser par la machine de traitement de récipients (10, 30, 40) sont stockés et peuvent être sélectionnés pour traiter des récipients (5) ; dans lequel l'au moins un dispositif de gestion (13 ; 130) effectue, pour gérer le stockage du jeu de données (111, 112 ; 311, 312, 313 ; 411, 412), les étapes suivantes,
générer, en cas de création d'un jeu des jeux de données (111, 112 ; 311, 312, 313 ; 411, 412), une version principale (V1_A ... V1_D) du jeu de données (111, 112 ; 311, 312, 313 ; 411, 412) et ainsi attribuer un statut (A ... D) à la version principale (V1_A ... V1_D), dans lequel le statut (A ... D) informe sur la situation d'édition actuelle du jeu de données (111, 112 ; 311, 312, 313 ; 411, 412), et dans lequel le statut (A ... D) résulte d'une situation qui se produit lors de la création du jeu de données (111, 112 ; 311, 312, 313 ; 411, 412) jusqu'à l'utilisation actuelle du jeu de données (111, 112 ; 311, 312, 313 ; 411, 412) dans la production dans le système de traitement de récipients (1),
conserver la version principale (V1_A ... V1_D), dans le cas où un changement est apporté à la version principale (V1_A ... V1_D) sans changer le statut (A ... D), et établir en plus, pour le changement vers la version principale (V1_A ... V1_D), une version secondaire (V1.1_A ... V1.N_A ; V1.1_B ... V1.N_B ; V1.1_D ... V1.N_D) ayant le statut (A ... D) de la version principale (V1_A ... V1_D), et
régler la portée de l'accès à la version principale (V1_A ... V1_D) et à l'au moins une version secondaire (V1.1_A ... V1.N_A ; V1.1_B ... V1.N_B ; V1.1_D ... V1.N_D) par un opérateur (18, 38, 48) de l'au moins une machine de traitement de récipients (10, 20, 30, 40) en fonction du statut (A ... D) et d'une autorisation prédéfinie d'un opérateur (18, 38, 48), et
attribuer à chaque jeu de données (111, 112 ; 311, 312, 313 ; 411, 412) nouvellement créé un statut (A) dans lequel une note (171, 371, 471) est également affichée à un opérateur (18, 38, 48) qui a toutes les autorisations pour éditer le jeu de données (111, 112 ; 311, 312, 313 ; 411, 412), lors de l'édition du jeu de données (111, 112 ; 311, 312, 313 ; 411, 412), selon laquelle le jeu de données (111, 112 ; 311, 312, 313 ; 411, 412) peut causer des dommages à l'au moins une machine de traitement de récipients (10, 20, 30, 40).
